# NEUE EUROPÄISCHE PATENTSCHRIFT

(11) **EP 2 739 676 B2**
(45) Veröffentlichungstag und Bekanntmachung des Hinweises auf die Entscheidung über den Einspruch: **14.08.2024**
(45) Hinweis auf die Patenterteilung: 25.09.2019
(21) Anmeldenummer: 12740369.9
(22) Anmeldetag: 30.07.2012
(51) Int. Cl.: C08J 9/12, C08J 9/14

(54) **HFO/WASSERGETRIEBENE HARTSCHAUM-SYSTEME**
HFO/WATER-EXPANDED HARD FOAM SYSTEMS
SYSTÈMES EN MOUSSE RIGIDE EXPANSÉE À HFO/EAU

(30) Priorität: 01.08.2011 EP 11176102
(43) Veröffentlichungstag der Anmeldung: 11.06.2014
(73) Patentinhaber: BASF SE, 67056 Ludwigshafen am Rhein (DE)
(72) Erfinder: GIESKER, Christiane, 49080 Osnabrück (DE); SCHÜTTE, Markus, 49080 Osnabrück (DE); LAX, Patrick, 49448 Lemförde (DE); KROGMANN, Jörg, 49393 Lohne (DE)
(74) Vertreter: BASF IP Association
(86) Internationale Anmeldenummer: PCT/EP2012/064847
(87) Internationale Veröffentlichungsnummer: WO 2013/017554

(56) Entgegenhaltungen:
- WO-A1-2009/073487
- US-A1- 2009 099 273
- US-A1- 2010 216 904

## Beschreibung

Die vorliegende Erfindung betrifft ein Verfahren zur Herstellung von Polyurethan-Hartschaumstoffen durch Umsetzung von a) wenigstens einem organischen Polyisocyanat mit b) wenigstens einer ein Treibmittelgemisch, enthaltend Wasser und halogenierte Alkene, enthaltenden Polyolkomponente, wobei die Menge an Wasser wenigstens 1,80 mol / kg Polyolkomponente b) und die Menge an halogeniertem Alken höchstens 2,00 mol /kg Polyolkomponente b) beträgt und die halogenierten Alkene ausgewählt sind aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon, wobei die Gesamtmenge an halogenierten Alkenen, die in der Polyolkomponente enthalten sind, höchstens 2,00 mol/kg Polyolkomponente beträgt, sowie die Verwendung eines solchen Treibmittelgemisches zur Herstellung entsprechender Polyurethan-Hartschaumstoffe und zur Erhöhung der Haftung und zur Verringerung der Wärmeleitfähigkeit von entsprechenden Polyurethan-Hartschaumstoffen. Ferner betrifft die vorliegende Erfindung einen Polyurethan-Hartschaumstoff, herstellbar durch das erfindungsgemäße Verfahren.

Polyurethan-Hartschaumstoffe haben vielfältige Einsatzmöglichkeiten und werden seit langem u. a. zur thermischen Dämmung wie beispielsweise Kühlgeräten eingesetzt. Zur Optimierung der Wärmeleitfähigkeit der Schaumstoffe werden in Kühlschrank-Anwendungen neben Wasser zusätzlich HCFC-141b (1,1,1-Dichlorfluorethan) oder HFC-365mfc (1,1,1,3,3-Pentafluorbutan) / HFC-227ea (1,1,1,2,3,3,3-Heptafluorpropan) oder Cyclopentan oder HFC-245fa (1,1,1,3,3-Pentafluorpropan) als physikalische Treibmittel eingesetzt. Beide Arten von Systemen haben jedoch auch Nachteile. Einerseits erfordern Cyclopentan-Systeme aufgrund der Brennbarkeit des Treibmittels einen erhöhten Aufwand in Sicherheitstechnik in einer Produktionsanlage. Andererseits haben 245fa-basierte Systeme den Nachteil der hohen Kosten für das Treibmittel und des vergleichsweise hohen negativen Effektes auf die globale Erderwärmung (Global Warming Potential GWP). Um einen ausreichend hohen Effekt auf die Absenkung der Wärmeleitfähigkeit zu haben, ist der molare Anteil des physikalischen Treibmittels in solchen Systemen üblicherweise höher als das durch die Isocyanat-Wasser-Reaktion erzeugte Kohlenstoffdioxid. Daher können 245fa-basierte Systeme mit hohen Anteilen an 245fa nicht als fertig mit dem Polyol-Blend abgemischte Komponenten bezogen werden, sondern das Treibmittel muss vor Ort durch entsprechende Zudosierungsanlagen für das Treibmittel zugegeben werden.

In bestimmten Anwendungen, bei denen die Energieeffizienz neben der thermischen Leitfähigkeit des Hartschaumstoffes auch noch von anderen Faktoren bedeutend beeinflusst wird, haben sich daneben heutzutage auch rein wassergetriebene Systeme am Markt etabliert. Diese weisen zwar eine höhere thermische Wärmeleitfähigkeit und eine höhere Dichte des Schaumstoffes auf, sind dagegen aber relativ leicht in einer Produktionsanlage zu verarbeiten. Es sind jedoch keine zusätzlichen technischen Maßnahmen in Richtung Umgang mit brennbaren Flüssigkeiten oder Dosieranlagen für das Treibmittel erforderlich.

Die Verwendung von fluorierten Alkenen, so genannten Hydrofluorolefinen (HFOs), die gegebenenfalls auch weitere Halogenatome wie Chlor, so genannte Hydrochlorfluorolefine (HCFOs) oder Brom enthalten können, als Treibmittel ist grundsätzlich bekannt. Beispiele für technisch relevante HFOs/HCFOs sind 1,1,1,4,4,4-Hexafluor-2-buten (HFO-1336mzz) mit einem Siedepunkt von ca. 32 °C oder 1-Chlor-3,3,3-trifluor-1-propen (HCFO-1233zd) mit einem Siedepunkt von ca. 19 °C. Auch die Verwendung von HFOs/HCFOs in Hartschaumsystemen ist beschrieben, insbesondere mit dem Fokus auf gute Wärmeleitfähigkeit bei einem geringen GWP-Wert. Allerdings wird dabei das Treibmittel in sehr hohen Einsatzmengen ähnlich denen heutiger 245fa-Systeme eingesetzt.

Verfahren zur Herstellung von Polyurethan-Schaumstoffen sind aus dem Stand der Technik bereits bekannt:
US 2008/125505 und US 2008/125506 beschreiben die Verwendung von Fluorhaltigen Olefinen als Treibmittel für Schäume.

WO 2008/121790 beschreibt Mischungen von Hydrofluorolefinen (HFO) und Hydrochlorfluorolefinen (HCFO) als Treibmittel zur Herstellung von Schäumen. WO 2008/121779 beschreibt eine Treibmittelzusammensetzung, die mindestens ein Hydrochlorolefin enthält.

WO 2007/053670 beschreibt Treibmittel zur Herstellung von Schäumen enthaltend ungesättigte Fluorkohlenwasserstoffe. Es werden auch Bromfluorolefine genannt. In den Anmeldungen WO 2009/073487 und WO 2009/089400 werden cis-1,1,1,4,4,4-Hexafluor-2-buten bzw. 2-Chlor-3,3,3-trifluorpropen als Treibmittel bei der Herstellung von Polyurethan- und Polyisocyanurat-Schäumen beschrieben. In US 2009/0099273 wird Tetrafluoropropen HFO-1234ze als Treibmittel für Polyurethan- und Polyisocyanurat-Schäume beschrieben.

WO 2007/002703, US 2008/207788 und WO 2009/067720 beschreiben HFO-1234ze und HCFO-1233zd bzw. Mischungen, die diese Substanzen zusammen mit Fluorhaltigen Ethern enthalten, in verschiedenen Anwendungen einschließlich der Verwendung als Treibmittel für PU-Schäume.

Wesentliche Anforderungen an Polyurethan-Hartschaumstoffe sind eine niedrige Wärmeleitfähigkeit, eine gute Fließfähigkeit, eine ausreichende Haftung des Schaums an den Deckschichten und gute mechanische Eigenschaften. Insbesondere bei Polyurethan-Hartschaumstoffen, die unter Verwendung von Wasser als Treibmittel hergestellt werden, ist die Haftung der Schaumstoffe häufig unzureichend.

Aufgabe der vorliegenden Erfindung gegenüber dem bekannten Stand der Technik ist es daher, ein Verfahren zur Herstellung von Polyurethan-Schaumstoffen bereitzustellen, welches entsprechende Schaumstoffe zugänglich macht, die eine niedrige Wärmeleitfähigkeit, eine ausreichende Haftung des Schaumstoffs an den Deckschichten und gute mechanische Eigenschaften aufweisen.

Es wurde nun überraschenderweise gefunden, dass Polyurethan-Hartschaumstoffe, die ganz oder überwiegend unter Verwendung von Wasser als Treibmittel hergestellt werden, eine verbesserte Haftung aufweisen, wenn zusätzlich ein halogeniertes Alken als Treibmittel eingesetzt wird, und Wasser und halogeniertes Alken in ganz bestimmten Mengen bezüglich der eingesetzten Polyolkomponente vorliegen.

Die vorliegende Erfindung betrifft daher ein Verfahren zur Herstellung von Polyurethan-Hartschaumstoffen durch Umsetzung von
a) wenigstens einem organischen Polyisocyanat mit
b) wenigstens einer ein Treibmittel, enthaltend Wasser und halogenierte Alkene, enthaltenden Polyolkomponente.
wobei die Menge an Wasser wenigstens 1,80 mol / kg Polyolkomponente b) und die Menge an halogeniertem Alken höchstens 2,00 mol /kg Polyolkomponente b) beträgt; und die halogenierten Alkene ausgewählt sind aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon, wobei die Gesamtmenge an halogenierten Alkenen, die in der Polyolkomponente enthalten sind, höchstens 2,00 mol/kg Polyolkomponente beträgt.

Das erfindungsgemäße Verfahren wird im Folgenden detailliert erläutert:
Als organische Polyisocyanate a) kommen alle dem Fachmann bekannten organischen Di- und Polyisocyanate in Betracht, vorzugsweise aromatische mehrwertige Isocyanate.

Im einzelnen seien beispielhaft genannt 2,4- und 2,6-Toluylen-diisocyanat (TDI) und die entsprechenden Isomerengemische, 4,4-, 2,4'- und 2,2'-Diphenylmethan-diisocyanat (MDI) und die entsprechenden Isomerengemische, Mischungen aus 4,4'-und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylenpolyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Uretdion-, Carbamat-, Isocyanurat-, Carbodiimid-, Allophanat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI, insbesondere mit einem NCO-Gehalt von 29 bis 34 Gew.-% und einer Viskosität bei 25 °C im Bereich von 100 bis 1000 mPa·s.

Als wenigstens eine Polyolkomponente b) kommen solche in Betracht, die mindestens zwei reaktive Gruppen, bevorzugt OH-Gruppen, enthalten, insbesondere Polyetheralkohole und/oder Polyesteralkohole mit OH-Zahlen im Bereich von 25 bis 800 mg KOH/g.

Die gegebenenfalls eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gegebenenfalls eingesetzten Polyesteralkohole haben zumeist eine Funktionalität von 1,5 bis 4.

In einer bevorzugten Ausführungsform enthält die wenigstens eine Polyolkomponente b) als Komponente bi) wenigstens ein Pflanzenöl, beispielsweise wenigstens eine Fettsäure ausgewählt aus der Gruppe bestehend aus Rizinusöl, Ölsäure und Mischungen davon. In einer weiteren Ausführungsform ist Komponente bi) ausschließlich oder zusätzlich wenigstens ein Polyetheralkohol oder wenigstens ein Polyesteralkohol.

Rizinusöl bi) wird vorzugsweise in einer Menge von 1-20 Gew.-%, bezogen auf das Gewicht der Polyolkomponente b), eingesetzt.

Das Rizinusöl kann auch chemisch modifiziert sein, insbesondere durch Anlagerung von Alkylenoxiden. Es ist jedoch bevorzugt, nicht modifiziertes Rizinusöl einzusetzen.

Insbesondere kommen als Polyolkomponente b) Polyetheralkohole, die nach bekannten Verfahren, beispielsweise durch anionische Polymerisation von Alkylenoxiden an H-funktionellen Startsubstanzen in Gegenwart von Katalysatoren, vorzugsweise Alkalihydroxiden oder Doppelmetallcyanid-Katalysatoren (DMC-Katalysatoren), hergestellt werden, zum Einsatz.

Als Alkylenoxide werden zumeist Ethylenoxid oder Propylenoxid, aber auch Tetrahydrofuran, verschiedene Butylenoxide, Styroloxid, vorzugsweise reines 1,2-Propylenoxid, eingesetzt. Die Alkylenoxide können einzeln, alternierend nacheinander oder als Mischungen verwendet werden.

Als Startsubstanzen kommen insbesondere Verbindungen mit mindestens 2, vorzugsweise 2 bis 8 Hydroxylgruppen oder mit mindestens zwei primären Aminogruppen im Molekül zum Einsatz.

Als Startsubstanzen mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen, sowie Melamin eingesetzt.

Als Startsubstanzen mit mindestens zwei primären Aminogruppen im Molekül werden vorzugsweise aromatische Di- und/oder Polyamine, beispielsweise Phenylendiamine, und 4,4'-, 2,4'- und 2,2'-Diamino-diphenylmethan sowie aliphatische Di- und Polyamine, wie Ethylendiamin, eingesetzt.

Die Polyetheralkohole besitzen eine Funktionalität von vorzugsweise 2 bis 8 und Hydroxylzahlen von vorzugsweise 25 mg KOH/g bis 800 mg KOH/g und insbesondere 150 mg KOH/g bis 570 mg KOH/g.

In einer bevorzugten Ausführungsform des erfindungsgemäßen Verfahrens enthält die Polyolkomponente b) mindestens einen Polyetheralkohol bii), der eine Hydroxylzahl im Bereich zwischen 350 und 600 und eine Funktionalität im Bereich zwischen 3,5 und 5,5 aufweist.

Der Polyetheralkohol bii) wird vorzugsweise durch Anlagerung von Ethylenoxid und/oder Propylenoxid, vorzugsweise Propylenoxid, an H-funktionelle Startsubstanzen hergestellt. Als Startsubstanzen werden vorzugsweise die oben aufgeführten Zucker, insbesondere Saccharose oder Sorbit, eingesetzt. Üblicherweise werden die Zucker in Gegenwart von sogenannten Co-Startern, zumeist bei Raumtemperatur flüssigen 2- oder 3-funktionellen Alkoholen, wie Glycerin, Trimethylolpropan, Ethylenglykol, Propylenglykol, oder Wasser mit den Alkylenoxiden umgesetzt. Als Katalysatoren werden üblicherweise basische Verbindungen, vorzugsweise Kaliumhydroxid, oder Amine eingesetzt.

Der Polyetheralkohol bii) wird vorzugsweise in einer Menge von 30-55 Gew.-%, bezogen auf das Gewicht der Polyolkomponente b), eingesetzt. In diesem Bereich wird eine besonders gute Haftung erzielt, weiterhin kann dabei die Sprödigkeit des Schaums verringert werden.

In einer weiteren bevorzugten Ausführungsform enthält die Komponente b) mindestens einen Polyetheralkohol biii). Hierbei handelt es sich um einen 2- bis 3-funktionellen Polyetheralkohol mit einer Hydroxylzahl im Bereich zwischen 150 und 450 mg KOH/g,

Als Startsubstanzen werden vorzugsweise Glycerin und/oder Trimethylolpropan und als Alkylenoxid Ethylenoxid und/oder Propylenoxid, insbesondere Propylenoxid, eingesetzt. Die Komponente biii) wird vorzugsweise in einer Menge 2-55 Gew.-%, bezogen auf das Gewicht der Polyolkomponente b), eingesetzt.

In einer bevorzugten Variante ist der Polyetheralkohol biii) ein 3-funktioneller Polyetheralkohol mit einer Hydroxylzahl im Bereich zwischen 150 und 420 mg KOH/g.

In einer weiter bevorzugten Ausführungsform des erfindungsgemäßen Verfahrens werden als Komponente biii) mindestens ein Polyetheralkohol biiia) und mindestens ein Polyetheralkohol biiib) eingesetzt.

Bei Polyetheralkohol biiia) handelt es sich um einen dreifunktionellen, vorzugsweise mit Trimethylolpropan gestarteten Polyetheralkohol mit einer Hydroxylzahl im Bereich zwischen 150 und 200 mg KOH/g.

Bei Polyetheralkohol biiib) handelt es sich um einen dreifunktionellen, vorzugsweise mit Glycerin gestarteten Polyetheralkohol mit einer Hydroxylzahl im Bereich zwischen 350 und 420 mg KOH/g.

Durch den Einsatz der Polyetheralkohole biii) kann die Phasenstabilität der Polyolkomponente verbessert werden.

Zusätzlich können auch weitere Verbindungen mit mindestens zwei gegenüber Isocyanat reaktiven Wasserstoffatomen in der Polyolkomponente b) eingesetzt werden, beispielsweise Kettenverlängerer und/oder Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente b), eingesetzt.

Das erfindungsgemäße Verfahren zeichnet sich dadurch aus, dass es in Gegenwart eines Treibmittelgemisches enthaltend Wasser und halogenierte Alkene durchgeführt wird, wobei die Menge an Wasser wenigstens 1,80 mol / kg Polyolkomponente b) und die Menge an halogeniertem Alken höchstens 2,00 mol /kg Polyolkomponente b) beträgt und die halogenierten Alkene ausgewählt sind aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon, wobei die Gesamtmenge an halogenierten Alkenen, die in der Polyolkomponente enthalten sind, höchstens 2,00 mol/kg Polyolkomponente beträgt.

Die Menge an Wasser beträgt wenigstens 1,80 mol / kg Polyolkomponente b), besonders bevorzugt wenigstens 2,00 mol / kg Polyolkomponente b). Die Menge an Wasser beträgt erfindungsgemäß bevorzugt höchstens 5,00 mol / kg Polyolkomponente b).

In einer bevorzugten Ausführungsform beträgt die Menge an halogeniertem Alken höchstens 1,50 mol / kg Polyolkomponente b), besonders bevorzugt höchstens 1,20 mol / kg Polyolkomponente b), ganz besonders bevorzugt höchstens 0,55 mol / kg Polyolkomponente b). Die Menge an halogeniertem Alken beträgt erfindungsgemäß bevorzugt wenigstens 0,10 mol / kg Polyolkomponente b).

Das erfindungsgemäße Verfahren zeichnet sich daher bevorzugt dadurch aus, dass es in Gegenwart eines Treibmittelgemisches enthaltend Wasser und halogenierte Alkene ausgewählt aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davondurchgeführt wird, wobei die Menge an Wasser wenigstens 1,80 mol / kg Polyolkomponente b) und die Menge an halogeniertem Alken höchstens 1,50 mol /kg Polyolkomponente b), besonders bevorzugt 1,20 mol /kg Polyolkomponente b), beträgt.

Das erfindungsgemäße Verfahren zeichnet sich besonders bevorzugt dadurch aus, dass es in Gegenwart eines Treibmittelgemisches enthaltend Wasser und halogenierte Alkene ausgewählt aus cis- oder trans-1,1,1,3-Tetrafluorpropen, 1,1,1-Trifluor-2-chlorpropen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon, durchgeführt wird, wobei die Menge an Wasser wenigstens 2,00 mol / kg Polyolkomponente b) und die Menge an halogeniertem Alken höchstens 0,55 mol /kg Polyolkomponente b) beträgt

Wasser ist dem Fachmann an sich bekannt. Erfindungsgemäß kann Leitungswasser, destilliertes und/oder entmineralisiertes Wasser verwendet werden.

Erfindungsgemäß sind die fluorierten Alkene ausgewählt aus der gruppe bestehend aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 3,3,4,4,5,5,5-Heptafluor-1-penten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon.

Ganz besonders bevorzugt wird erfindungsgemäß als Treibmittel neben Wasser 1-Chlor-3,3,3-trifluor-propen oder 1,1,1,4,4,4-Hexafluor-buten oder eine Mischung von beiden in den oben genannten Mengen eingesetzt.

In einer bevorzugten Ausführungsform des erfindungsgemäßen Verfahrens enthält die Polyolkomponente b) ein weiteres Additiv ausgewählt aus der Gruppe bestehend aus Alkylencarbonaten, Kohlensäureamiden, Pyrrolidonen, Katalysatoren, Hilfsmitteln, Zusatzstoffen und Mischungen davon.

Geeignete Alkylencarbonate sind vorzugsweise Ethylencarbonat und/oder Propylencarbonat, besonders bevorzugt Propylencarbonat.

Geeignete Kohlensäureamide sind vorzugsweise Harnstoff und/oder Alkylharnstoffe. Die Alkylharnstoffe sind insbesondere Tetramethylharnstoff und Diisobutylharnstoff.

Ein geeignetes Pyrrolidon ist insbesondere 1-Methyl-2-pyrrolidon.

Alkylencarbonate, Kohlensäureamide und/oder Pyrrolidone werden beispielsweise in einer Menge von 0 bis 15 Gew.-%, bevorzugt 1,5 - 15 Gew.-%, jeweils bezogen auf das Gewicht der Polyolkomponente b), eingesetzt. Dabei können die genannten Komponenten einzeln oder in beliebigen Mischungen untereinander eingesetzt werden. Vorzugsweise wird Propylencarbonat eingesetzt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise basische Amine, wie sekundäre aliphatische Amine, Imidazole, Amidine, Alkanolamine, Lewissäuren oder metallorganische Verbindungen, insbesondere solche auf Basis von Zinn. Auch Katalysatorsysteme, bestehend aus einer Mischung verschiedener Katalysatoren, können eingesetzt werden.

Falls in den Polyurethan-Hartschaumstoff Isocyanuratgruppen eingebaut werden sollen, werden spezielle Katalysatoren bevorzugt. Als Isocyanurat-Katalysatoren werden beispielsweise die oben genannten Amine oder Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Antioxidantien, Flammschutzmittel, Hydrolyseschutzmittel, Antistatika, fungistatisch und bakteriostatisch wirkende Mittel zum Einsatz.

Die Summe der Mengen der in der Polyolkomponente b) vorliegenden Komponenten beträgt erfindungsgemäß im Allgemeinen 100 Gew.-%.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, 2. Auflage: Kapitel 3 (Rohstoffe), SS. 42 - 111 und Abschnitt 6.1 (PUR-Hartschaumstoffe, Chemie und Rohstoffe), SS. 247 - 249.

Zur Herstellung der Hartschaumstoffe auf Isocyanatbasis werden die Polyisocyanate und die Polyolkomponente b) in solchen Mengen zur Umsetzung gebracht, dass der Isocyanatindex im Falle der Polyurethan-Schaumstoffe in einem Bereich zwischen 100 und 220, vorzugsweise zwischen 110 und 180, liegt.

Als besonders vorteilhaft hat es sich erwiesen, nach dem Zweikomponenten-Verfahren zu arbeiten und die wenigstens eine Polyolkomponente b) mit den erfindungsgemäßen Treibmitteln und gegebenenfalls Schaumstabilisatoren und Flammschutzmitteln sowie den Katalysatoren und Hilfs- und/oder Zusatzstoffen zu einer sogenannten Polyolkomponente zu vereinigen und diese mit dem wenigstens einen organischen Polyisocyanat oder den Mischungen und gegebenenfalls Treibmitteln, zur Umsetzung zu bringen.

Durch das erfindungsgemäße Verfahren ist es gelungen, die Haftung von überwiegend mit Wasser getriebenen Polyurethan-Hartschaumstoffen zu verbessern. Weiterhin konnten die mechanischen Eigenschaften der Schaumstoffe sowie auch die Phasenstabilität der Polyolkomponente verbessert werden.

Die vorliegende Erfindung betrifft auch die Verwendung eines Treibmittelgemisches enthaltend Wasser und halogenierte Alkene zur Herstellung von Polyurethan-Hartschaumstoffen aus wenigstens einem organischen Polyisocyanat a) und wenigstens einer Polyolkomponente b), wobei die Menge an Wasser wenigstens 1,80 mol / kg Polyolkomponente b) und die Menge an halogeniertem Alken höchstens 2,00 mol /kg Polyolkomponente b) beträgt und die halogenierten Alkene ausgewählt sind aus cis-oder trans-1,1,1,3-Tetrafluorpropen, 1,1,1-Trifluor-2-chlor-propen, 1-Chlor-3,3,3-trifluorpropen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon, wobei die Gesamtmenge an halogenierten Alkenen, die in der Polyolkomponente enthalten sind, höchstens 2,00 mol/kg Polyolkomponente beträgt.

Die vorliegende Erfindung betrifft auch die Verwendung eines Treibmittelgemisches enthaltend Wasser und halogenierte Alkene zur Erhöhung der Haftung und zur Verringerung der Wärmeleitfähigkeit von Polyurethan-Hartschaumstoffen aus wenigstens einem organischen Polyisocyanat a) und wenigstens einer Polyolkomponente b), wobei die Menge an Wasser wenigstens 1,80 mol / kg Polyolkomponente b) und die Menge an halogeniertem Alken höchstens 2,00 mol /kg Polyolkomponente b) beträgt und die halogenierten Alkene ausgewählt sind aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon, wobei die Gesamtmenge an halogenierten Alkenen, die in der Polyolkomponente enthalten sind, höchstens 2,00 mol/kg Polyolkomponente beträgt.

Die vorliegende Erfindung betrifft auch einen Polyurethan-Hartschaumstoff, herstellbar durch das erfindungsgemäße Verfahren.

Bezüglich der erfindungsgemäßen Verwendung und dem erfindungsgemäßen Polyurethan-Hartschaumstoff gilt das oben Gesagte entsprechend, insbesondere gelten die genannten bevorzugten Ausführungsformen entsprechend.

### Beispiele

Die vorliegende Erfindung soll durch die Beispiele näher erläutert werden. Die Beispiele sollen aber nicht einschränkend verstanden werden.

### Übersicht Messmethoden

### 1. Untersuchungen an Flüssigproben

### 1.1 Bestimmung der Viskosität:

Die Viskosität der Polyole wird, wenn nicht anders angegeben, bei 25 °C gemäß DIN EN ISO 3219 mit einem Rotationsviskosimeter Rheotec RC 20 unter Verwendung der Spindel CC 25 DIN (Durchmesser der Spindel: 12,5 mm; Innendurchmesser des Messzylinders: 13,56 mm) bei einer Scherrate von 50 Hz bestimmt.

### 1.2 Messung der Hydroxylzahl:

Die Hydroxylzahlen (OH-Zahlen) werden nach DIN 53240 bestimmt.

### 2. Untersuchungen an Schaumproben

### 2.1 Bestimmung der Sprödigkeit der Hartschäume:

Die Sprödigkeit wird qualitativ durch Eindrücken der Schäume mit dem Daumen im Randbereich ermittelt. Spröde Schäume zeichnen sich durch eine irreversible Verformung des Schaumstoffes bei bereits geringer Deformation aus.

### 2.2 Bestimmung der Druckfestigkeit:

Die Druckfestigkeit wird bestimmt nach DIN 53421/DIN EN ISO 604.

### 2.3 Wärmeleitfähigkeit:

Nach dem Schäumen wird ein Schaumquader für 24 Stunden bei Normklima gelagert. Der Prüfkörper wird dann mittig aus dem Schaumquader geschnitten (d.h. die Ober- und Unterseite sind entfernt) und hat die Abmessungen 200 x 200 x 30 mm³. Die Wärmeleitfähigkeit wird dann mit einem Wärmestrommessplattengerät Hesto A50 bei einer Mitteltemperatur von 23 °C bestimmt.

### 2.4 Dimensionsstabilität (Autoklav):

Einem Schaumquader werden 1 Tag nach der Herstellung 18 gleichmäßig über die gesamte Länge verteilte Proben entnommen. Die Prüfkörper haben die ungefähren Abmessungen 5 x 5 x 4 cm³. Das genaue Volumen wird durch Eintauchen in ein Wasserbad bestimmt. Die Körper werden anschließend trocken getupft und 10 Minuten bei 1 bar Überdruck in einem Autoklav gelagert. Von jedem Prüfkörper wird erneut das Volumen bestimmt und der Mittelwert über alle relativen Volumenabnahmen berechnet.

### 2.5 Haftungsmessungen:

Die Messung der Haftung des Polyurethan-Schaumstoffes zu Metalloberflächen erfolgt an einem Schaumquader (500 x 200 x 50 mm³), an dem noch das mit Aluminium beschichtete Papier haftet. Dieser Prüfkörper wird am Anfang der Lanze (2000 x 200 x 50 mm³) gesägt. Die Deckschicht der Lanze wird mit einem Messer in einem Abstand von 6 cm auf eine Länge von 20 cm eingeritzt. Die Bestimmung der Haftung erfolgt 10 Minuten nach Beginn des Schäumvorgangs (der Prüfkörper wurde nach 7 min entformt) mit Hilfe einer Zugprüfmaschine, wobei das beschichtete Papier mit einer Zuggeschwindigkeit von 100 mm/min senkrecht zur Formkörperebene über eine Umlenkrolle abgezogen wird. In der Zugvorrichtung ist ein Kraftmesser integriert, der die für das Abziehen der Folie nötige Kraft misst.

### 3. Untersuchungen an handverschäumten Proben

Die Polyolkomponenten werden mit der angegebenen Menge an IsocyanatKomponente mit einem Laborrührer (Vollrath-Rührer) mit einer Rührgeschwindigkeit von 1400 Umdrehungen pro Minute und einer Rührzeit von 10 Sekunden in einem Becher intensiv vermischt und in diesem zur Verschäumung gebracht. Bei diesem sogenannten Bechertest werden die Start-, Abbinde- und Steigzeit, die Rohdichte sowie ggf. die Sprödigkeit bestimmt.

Weitere Messgrößen werden von Schaumkörpern bestimmt, die durch Ausgießen des im Becher verrührten Reaktionsgemisches in eine Kastenform mit den Abmessungen 160 x 400 x 45 mm³ erhalten werden. Für die Bestimmung der Wärmeleitfähigkeit kann die Kastenform auf eine Breite von 200 mm vergrößert werden. Die Form wird zuvor mit Papier, das auf einer Seite mit Aluminium beschichtet ist, ausgelegt. Der Schaum wird auf die mit Aluminium beschichtete Fläche aufgetragen und die Form dann geschlossen. Falls nicht anders angegeben, wird die Form auf 35 °C temperiert und der Schaumkörper nach 7 Minuten entformt. Die Einwaage wird derart gewählt, dass sich die gewünschte Rohdichte -falls nicht anders angegeben 40 bis 43 kg/m³- ergibt. Vor allen folgenden Messungen mit Ausnahme der Haftungsmessung wird das beschichtete Papier entfernt.

### 3.1 Bestimmung der Rohdichte (Bechertest):

Die Rohdichte des Schaums wird beim Bechertest durch Abtrennen des Schaums oberhalb der Becherkante und anschließendem Wiegen des Bechers samt verbleibendem Schaum bestimmt. Diese Masse, abzüglich der Masse des leeren Bechers (gemessen vor dem Verschäumen) dividiert durch das Volumen des Bechers (735 cm³) ergibt die Rohdichte.

### 4. Untersuchungen an maschinenverschäumten Probekörpern

Aus den angegebenen Rohstoffen wird eine Polyolkomponente hergestellt. Mittels eines Hochdruck-Puromaten^{®} PU 30/80 IQ (Elastogran GmbH) mit einer Austragsmenge von 250 g/s wird die Polyolkomponente mit der jeweils angegebenen Menge des angegebenen Isocyanats vermischt. Die Reaktionsmischung wird in temperierte Formwerkzeuge der Abmessungen
2000 x 200 x 50 mm³ (Lanze) bzw.
700 x 400 x 90 mm³ (Kasten)
eingetragen und dort zum Aufschäumen belassen. Die Form wird zuvor mit Papier, das auf einer Seite mit Aluminium beschichtet ist, ausgelegt. Der Schaum wird auf die mit Aluminium beschichtete Fläche aufgetragen und die Form dann geschlossen.

Falls nicht anders angegeben, wird die Form auf 45 °C temperiert und der Schaumkörper nach 7 Minuten entformt. Die Überfüllung beträgt, falls nicht anders angegeben, 14,5%. Vor allen folgenden Messungen mit Ausnahme der Haftungsmessung wird das beschichtete Papier entfernt.

### Bestimmung von Start- und Abbindezeit sowie Rohdichte:

In einem PE-Sack (Durchmesser ca. 30 cm) werden ca. 900 g der Reaktionsmischung eingeschossen. Die Startzeit ist definiert als Zeitspanne zwischen Schussbeginn und Beginn der Volumenexpansion des Reaktionsgemisches. Die Abbindezeit ist die Zeitspanne zwischen Schussbeginn und dem Moment, ab dem sich mittels eines Schaumstreifens Fäden aus dem Reaktionsgemisch ziehen lassen.

Aus der Mitte der gleichen Probe werden zur Bestimmung der frei geschäumten Kernrohdichte nach Aushärtung (24 h später) des Schaumstoffes fünf ca. 60 x 60 x 60 mm³ große Proben geschnitten. Sie werden gewogen und durch Eintauchen in ein Wasserbad wird ihr Volumen bestimmt. Aus diesen Größen wir die Dichte berechnet und der Mittelwert der 5 Proben wird angegeben.

### Bestimmung des Entformungsverhaltens:

Die Bestimmung des Entformungsverhaltens erfolgt durch Messung des Nachtriebs von Schaumkörpern, die mit der Kastenform in Abhängigkeit von Entformzeit und Überfüllung (OP = Overpacking, entspricht dem Verhältnis der Gesamtrohdichte zu Mindestfülldichte) hergestellt werden. Der Nachtrieb wird durch Höhenmessung der Schaumquader nach 24 Stunden ermittelt.

### Eingesetzte Rohstoffe:

### Polyol 1 (entspricht Komponente bii):

Polyetherpolyol auf Basis von Sorbitol und Propylenoxid mit einer Hydroxylzahl von 490 mg KOH/g, einer Funktionalität von 5 und einer Viskosität von 22750 mPa•s bei 25 °C

### Polyol 2 (entspricht Komponente biiia):

Polyetherpolyol auf Basis von Trimethylolpropan und Propylenoxid mit einer Hydroxylzahl von 160 mg KOH/g, einer Funktionalität von 3 und einer Viskosität von 300 mPa•s bei 25 °C

### Polyol 3 (entspricht Komponente bi):

Rizinusöl mit einer Hydroxylzahl von 160 mg KOH/g und einer Viskosität von 1000 mPa•s bei 20 °C

### Polyol 4 (entspricht Komponente biiib):

Polyetherpolyol auf Basis von Glycerin und Propylenoxid mit einer Hydroxylzahl von 400 mg KOH/g, einer Funktionalität von 3 und einer Viskosität von 370 mPa•s bei 25 °C

| | |
|---|---|
| Schaumstabilisator: | Tegostab^{®} B 8496 (Evonik) |
| Amin-Katalysator 1: | Dimethylcyclohexylamin |
| Amin-Katalysator 2: | Lupragen^{®} N 600 (BASF SE) |
| Isocyanat: | Lupranat^{®} M20 (BASF SE), NCO-Gehalt 31,8% |

Die Mengen der Ausgangsstoffe sowie die Messergebnisse sind folgenden Tabellen zu entnehmen:
Die Beispiele 8, 9 und 10 entsprechen der Erfindung, während die Beispiele 5 und 6 Referenzbeispiele sind.

**Tabelle 1: erfindungsgemäße Beispiele 8, 9 und 10 und Vergleichsbeispiele 1 (V), 2 (V), 3 (V), 4 (V), 5 (V), 6 (V) und 7 (V),**

| | | **1 (V)** | **2 (V)** | **3 (V)** | **4 (V)** | **5 (V)** | **6 (V)** | **7 (V)** | **8** | **9** | **10** |
|---|---|---|---|---|---|---|---|---|---|---|---|
| | **Beispiel** | **Ref.** | **H₂O** | **245fa** | **365mfc/ 227ea** | **1336mzz** | **1233zd** | **245fa** | **1336mzz** | **1336mzz** | **1233zd** |
| | **Polyol-Komponente:** | | | | | | | | | | |
| | Polyol 1 [kg] | 37,40 | 36,70 | 34,20 | 33,80 | 33,40 | 34,20 | 34,60 | 34,60 | 34,95 | 35,39 |
| | Polyol 2 [kg] | 36,15 | 35,45 | 32,95 | 32,55 | 32,15 | 32,95 | 33,45 | 33,45 | 33,61 | 34,09 |
| | Polyol 3 [kg] | 12,35 | 12,00 | 10,75 | 10,55 | 10,35 | 10,75 | 11 | 11 | 10,82 | 11,12 |
| | Polyol 4 [kg] | 3,00 | 3,00 | 3,00 | 3,00 | 3,00 | 3,00 | 3,00 | 3,00 | 3,14 | 3,10 |
| | Propylencarbonat [kg] | 5,00 | 5,00 | 5,00 | 5,00 | 5,00 | 5,00 | 5,00 | 5,00 | 5,23 | 5,17 |
| | Tegostab B 8496 [kg] | 2,00 | 2,00 | 2,00 | 2,00 | 2,00 | 2,00 | 2,00 | 2,00 | 2,09 | 2,07 |
| | Amin-Katalysator 1 [kg] | 1,10 | 1,10 | 1,10 | 1,10 | 1,10 | 1,10 | 1,20 | 1,20 | 1,15 | 1,14 |
| | Amin-Katalysator 2 [kg] | 0,40 | 0,40 | 0,40 | 0,40 | 0,40 | 0,40 | 0,40 | 0,40 | 0,42 | 0,41 |
| | Wasser [kg] | 2,60 | 4,35 | 2,60 | 2,60 | 2,60 | 2,60 | 4,35 | 4,35 | 3,40 | 3,40 |
| | 245fa [kg] | - | - | 8,00 | - | - | -- | 5,00 | - | - | - |
| | 365mfc/227ea [kg] | - | - | - | 9,00 | - | - | | | - | - |
| | 1336mmzz [kg] | - | - | - | - | 10,00 | - | - | 5,00 | 5,20 | - |
| | 1233zd [kg] | - | - | - | - | - | 8,00 | - | - | - | 4,00 |
| | Summe Polyol-Komponente [kg] | 100,00 | 100,00 | 100,00 | 100,00 | 100,00 | 100,00 | 100,00 | 100,00 | 100,00 | 100,00 |
| | n H₂O [mol] | 144,4 | 241,7 | 144,4 | 144,4 | 144,4 | 144,4 | 241,7 | 241,7 | 189,0 | 189,0 |
| n H₂O/ kg Polyol [mol/kg] | 1,44 | 2,42 | 1,44 | 1,44 | 1,44 | 1,44 | 2,42 | 2,42 | 1,89 | 1,89 | |
| n phys. Treibmittel (HFC oder HFO oder HCFO) [mol] | - | - | 59,7 | 59,6 | 61,0 | 61,5 | 37,3 | 30,5 | 31,72 | 30,75 | |
| n phys. Treibmittel / kg Polvol [mol/kg] | | | 0,6 | 0,6 | 0,6 | 0,6 | 0,37 | 0,30 | 0,32 | 0,31 | |
| | | | | | | | | | | | |

| **Verarbeitung:** | | | | | | | | | | | |
|---|---|---|---|---|---|---|---|---|---|---|---|
| Gravimetrisches Mischungsverhältnis | 100: | 100: | 100: | 100: | 100: | 100: | 100: | 100: | 100: | 100: | |
| Polyol : Lupranat M20 | 123 | 151 | 116 | 115 | 114 | 116 | 147 | 147 | 131 | 132 | |
| Index | 117 | 117 | 117 | 117 | 117 | 117 | 117 | 117 | 117 | 117 | |
| | | | | | | | | | | | |

| **Bechertest:** | | | | | | | | | | | |
|---|---|---|---|---|---|---|---|---|---|---|---|
| Dichte [g/l] | 47,8 | 32,9 | 33,8 | 33,6 | 33,6 | 34,2 | - | - | 33,9 | 34,0 | |
| Sprödigkeit | etwas | etwas | nicht sp. | nicht sp. | nicht sp. | nicht sp. | - | - | nicht sp. | nicht sp. | |

| **Mini-Kasten:** | | | | | | | | | | | |
|---|---|---|---|---|---|---|---|---|---|---|---|
| Haftung bei 35 °C nach 10 min [N] | 13,67 | 5,04 | - | - | 10,10 | 8,59 | - | - | 12,5 | 12,1 | |
| Wärmeleitfähigkeit nach 24 h bei 23 °C [mW/m·K] | 23,7 | 22,3 | 21,0 | 21,1 | 20,3 | 21,0 | - | - | n. b. | n. b. | |
| Sprödigkeit | etwas | etwas | nicht sp. | nicht sp. | nicht sp. | nicht sp. | - | - | nicht sp. | nicht sp. | |

| Maschinenversuch: | | | | | | | | | | | |
|---|---|---|---|---|---|---|---|---|---|---|---|
| Dichte [g/l] | - | - | - | - | - | - | 23,3 | 24,0 | - | - | |
| Dimensionsstabilität [Vol-%], Autoklav 10 min bei 1 bar | - | - | - | - | - | - | 4,46 | 3,95 | - | - | |
| Haftung bei 35 °C nach 10 min [N] | - | - | - | - | - | - | 9,38 | 10,40 | - | - | |
| Haftung bei 45 °C nach 10 min [N] | - | - | - | - | - | - | 14,32 | 15,06 | - | - | |

**Tabelle 2: weitere Versuche**

| | **1233zd** | | | | **1336mzz** | | | |
|---|---|---|---|---|---|---|---|---|
| **Mol HFO oder HCFO/kg Polyol-Komponente** | **0,1** | **0,3** | **0,6** | **1,2** | **0,1** | **0,3** | **0,6** | **1,2** |
| | | | | | | | | |
| Polyol 1 [pbw] | 36,80 | 35,80 | 34,20 | 31,20 | 36,80 | 35,40 | 33,40 | 29,60 |
| Polyol 2 [pbw] | 35,55 | 34,55 | 32,95 | 29,95 | 35,55 | 34,15 | 32,15 | 28,35 |
| Polyol 3 [pbw] | 12,05 | 11,55 | 10,75 | 9,25 | 12,05 | 11,35 | 10,35 | 8,45 |
| Polyol 4 [pbw] | 3,00 | | | | | | | |
| Propylencarbonat [pbw] | 5,00 | | | | | | | |
| Tegostab B 8496 [pbw] | 2,00 | | | | | | | |
| Amin-Katalysator 2 [pbw] | 0,40 | | | | | | | |
| Amin-Katalysator 1 [pbw] | 1,10 | | | | | | | |
| H₂O [pbw] | 2,60 | | | | | | | |
| 1233zd [pbw] | **1,50** | **4,00** | **8,00** | **15,50** | **-** | **-** | **-** | **-** |
| 1336mzz [pbw] | **-** | **-** | **-** | **-** | **1,50** | **5,00** | **10,00** | **19,50** |
| | | | | | | | | |
| Mischungsverhältnis Polyol : M20 | 100:121 | 100:119 | 100:116 | 100:110 | 100:121 | 100:119 | 100:114 | 100:106 |
| Index | 117 | | | | | | | |
| | | | | | | | | |

| Bechertest: | | | | | | | | |
|---|---|---|---|---|---|---|---|---|
| Dichte [g/l] | 44,0 | 39,6 | 34,2 | 27,3 | 44,0 | 39,4 | 33,6 | 26,3 |
| Sprödigkeit | nicht spröde | | | | | | | |
| | | | | | | | | |

| **Mini-Kasten:** | | | | | | | | |
|---|---|---|---|---|---|---|---|---|
| Haftung bei 35 °C nach 10 min [N] | 13,35 | 12,61 | 8,59 | 9,51 | 12,18 | 13,04 | 10,10 | 5,15 |
| Wärmeleitfähigkeit nach 24 h bei 23°C [mW/m·K] | 22,7 | 22,0 | 21,0 | 20,4 | 22,9 | 21,5 | 20,3 | 21,5 |
| Sprödigkeit | nicht spröde | | | | | | | |

In den Tabellen 1 und 2 bedeuten:

| | |
|---|---|
| 245fa: | HFC-245fa (1,1,1,3,3-Pentafluorpropan) |
| 365mfc: | HFC-365mfc (1,1,1,3,3-Pentafluorbutan) |
| 227ea: | HFC-227ea (1,1,1,2,3,3,3-Heptafluorpropan) |
| 1336mzz: | HFO-1336mzz (1,1,1,4,4,4-Hexafluor-2-buten) |
| 1233zd: | HCFO-1233zd (1-Chlor-3,3,3-trifluor-1-propen) |

### Zusammenfassung der Beispiele

### Beispiel 1:

Nur mit Wasser getriebener Hartschaum mit hoher Dichte: Gute Haftung, aber schlechte (zu hohe) Wärmeleitfähigkeit, spröder Schaum, hohe Rohdichte nachteilig.

### Beispiel 2:

Nur mit Wasser getriebener Hartschaum mit annehmbarer Dichte: Sehr schlechte Haftung, spröder Schaum, Wärmeleitfähigkeit besser als bei Beispiel 1.

### Beispiele 3 und 4:

Mit Wasser und Fluoralkanen (HFC) als Kotreibmittel verschäumte Hartschäume: Dichte wie im Vergleichsbeispiel 2, nicht spröde, gute Wärmeleitfähigkeit.

### Beispiele 5 und 6 (Referenz):

Mit Wasser und Fluoralkenen (HFO) als Kotreibmittel verschäumte Hartschäume: Dichte wie in Beispielen 2 bis 4, nicht spröde, deutlich verbesserte Haftung als bei Beispiel 2, gute bis sehr gute (niedrige) Wärmeleitfähigkeit.

### Beispiel 7:

Mit Wasser und Fluoralkan (HFC) als Kotreibmittel verschäumter Hartschaum niedrigerer Dichte: Maschinenversuch mit Hochdruckmischkopf.

### Beispiel 8 (erfindungsgemäß):

Mit Wasser und Fluoralken (HFO) als Kotreibmittel verschäumter Hartschaum niedrigerer Dichte: Maschinenversuch mit Hochdruckmischkopf, vergleichbare Dichte wie Beispiel 7, verbesserte Dimensionsstabilität und verbesserte Haftung im Vergleich zu Beispiel 7.

### Beispiele 9 und 10 (erfindungsgemäß):

Mit Wasser und Fluoralkenen (HFO) als Kotreibmittel verschäumte Hartschäume wie in den erfindungsgemäßen Beispielen 5 und 6, aber mit höherem Anteil an HFO: Dichte wie in den Beispielen 2 bis 6, nicht spröde, verbesserte Haftung gegenüber den Beispielen 2, 5 und 6.

## Patentansprüche

1. Verfahren zur Herstellung von Polyurethan-Hartschaumstoffen durch Umsetzung von
a) wenigstens einem organischen Polyisocyanat mit
b) wenigstens einer, ein Treibmittelgemisch enthaltend Wasser und halogenierte Alkene, enthaltenden Polyolkomponente
**dadurch gekennzeichnet, dass** die Menge an Wasser wenigstens 1,840 mol / kg Polyolkomponente b) und die Menge an halogeniertem Alken höchstens 2,00 mol /kg Polyolkomponente b) beträgt; und
dass die halogenierten Alkene ausgewählt sind aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon; wobei die Gesamtmenge an halogenierten Alkenen, die in der Polyolkomponente enthalten sind, höchstens 2,00 mol/kg Polyolkomponente beträgt.

2. Verfahren nach Anspruch 1, **dadurch gekennzeichnet, dass** die Polyolkomponente b) ein weiteres Additiv enthält ausgewählt aus der Gruppe bestehend aus Alkylencarbonaten, Kohlensäureamide, Pyrrolidonen, Katalysatoren, Hilfsmitteln, Zusatzstoffen und Mischungen davon.

3. Verfahren nach Anspruch 1 oder 2, **dadurch gekennzeichnet, dass** die Komponente b) einen Polyetheralkohol biii) mit einer Funktionalität von 2 bis 3 und einer Hydroxylzahl von 150 bis 450 mg KOH/g enthält.

4. Verfahren nach Anspruch 3, **dadurch gekennzeichnet, dass** der Polyetheralkohol biii) in einer Menge von 2 bis 40 Gew.-%, bezogen auf die Polyolkomponente b), eingesetzt wird.

5. Verfahren nach einem der Ansprüche 1 bis 4, **dadurch gekennzeichnet, dass** die Komponente b) einen Polyetheralkohol bii) mit einer Funktionalität von 3,5 bis 5,5 und einer Hydroxylzahl von 350 bis 600 mg KOH/g enthält.

6. Verfahren nach Anspruch 5, **dadurch gekennzeichnet, dass** der Polyetheralkohol bii) in einer Menge von 20 bis 55 Gew.-%, bezogen auf die Polyolkomponente b), eingesetzt wird.

7. Verwendung eines Treibmittelgemisches enthaltend Wasser und halogenierte Alkene in wenigstens einer Polyolkomponente b) zur Herstellung von Polyurethan-Hartschaumstoffen aus wenigstens einem organischen Polyisocyanat a) und der wenigstens einen Polyolkomponente b), **dadurch gekennzeichnet, dass** die Menge an Wasser wenigstens 1,840 mol / kg Polyolkomponente b) und die Menge an halogeniertem Alken höchstens 2,00 mol /kg Polyolkomponente b) beträgt; und dass die halogenierten Alkene ausgewählt sind aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon; wobei die Gesamtmenge an halogenierten Alkenen, die in der Polyolkomponente enthalten sind, höchstens 2,00 mol/kg Polyolkomponente beträgt.

8. Verwendung eines Treibmittelgemisches enthaltend Wasser und halogenierte Alkene in wenigstens einer Polyolkomponente b) zur Erhöhung der Haftung und zur Verringerung der Wärmeleitfähigkeit von Polyurethan-Hartschaumstoffen aus wenigstens einem organischen Polyisocyanat a) und wenigstens einer Polyolkomponente b), **dadurch gekennzeichnet, dass** die Menge an Wasser wenigstens 1,80 mol / kg Polyolkomponente b) und die Menge an halogeniertem Alken höchstens 2,00 mol /kg Polyolkomponente b) beträgt; und dass die halogenierten Alkene ausgewählt sind aus cis- oder trans-1,1,1,3-Tetrafluorpropen, 1,1,1-Trifluor-2-chlor-propen, 1-Chlor-3,3,3-trifluor-propen, 1,1,1,2,3-Pentafluorpropen, in cis-oder trans-Form, 1,1,1,4,4,4-Hexafluor-buten, 1-Brompentafluorpropen, 2-Brompentafluorpropen, 3-Brompentafluorpropen, 1,1,2,3,3,4,4-Heptafluor-1-buten, 1-Brom-2,3,3,3-tetrafluorpropen, 2-Brom-1,3,3,3-tetrafluorpropen, 3-Brom-1,1,3,3-tetrafluorpropen, 2-Brom-3,3,3-trifluorpropen, E-1-Brom-3,3,3-trifluorpropen, 3,3,3-Trifluor-2-(trifluormethyl)propen, 1,1,1-Trifluor-2-buten und Mischungen davon; wobei die Gesamtmenge an halogenierten Alkenen, die in der Polyolkomponente enthalten sind, höchstens 2,00 mol/kg Polyolkomponente beträgt.

9. Polyurethan-Hartschaumstoff, herstellbar durch das Verfahren gemäß einem der Ansprüche 1 bis 6.

## Claims

1. A process for producing rigid polyurethane foams by reaction of
a) at least one organic polyisocyanate with
b) at least one polyol component comprising a blowing agent mixture comprising water and halogenated alkenes,
wherein the amount of water is at least 1.80 mol/kg of polyol component b) and the amount of halogenated alkene is at most 2.00 mol/kg of polyol component b); and
wherein the halogenated alkenes are selected from cis- or trans-1,1,1,3-tetrafluoropropene, 1,1,1-trifluoro-2-chloropropene, 1-chloro-3,3,3-trifluoropropene, 1,1,1,2,3-pentafluoropropene, in cis or trans form, 1,1,1,4,4,4-hexafluorobutene, 1-bromopentafluoropropene, 2-bromopentafluoropropene, 3-bromopentafluoropropene, 1,1,2,3,3,4,4-hepta-fluoro-1-butene, 1-bromo-2,3,3,3-tetrafluoropropene, 2-bromo-1, 3, 3, 3-tetrafluoropropene, 3-bromo-1,1,3,3-tetrafluoropropene, 2-bromo-3,3,3-trifluoropropene, E-1-bromo-3,3,3-trifluoropropene, 3,3,3-trifluoro-2-(trifluoromethyl)propene, 1,1,1-trifluoro-2-butene and mixtures thereof; where the total amount of halogenated alkenes present in the polyol component is at most 2.00 mol/kg of polyol component.

2. The process according to claim 1, wherein said polyol component b) comprises a further additive selected from the group consisting of alkylene carbonates, carbonamides, pyrrolidones, catalysts, auxiliaries, additives and mixtures thereof.

3. The process according to claim 1 or 2, wherein said component b) comprises a polyether alcohol biii) having a functionality of 2 to 3 and a hydroxyl number of 150 to 450 mg KOH/g.

4. The process according to claim 3, wherein said polyether alcohol biii) is used in an amount of 2% to 40% by weight, based on said polyol component b).

5. The process according to any one of claims 1 to 4, wherein said component b) comprises a polyether alcohol bii) having a functionality of 3.5 to 5.5 and a hydroxyl number of 350 to 600 mg KOH/g.

6. The process according to claim 5, wherein said polyether alcohol bii) is used in an amount of 20% to 55% by weight, based on said polyol component b).

7. The use of a blowing agent mixture comprising water and halogenated alkenes in at least one polyol component b) for producing rigid polyurethane foams from at least one organic polyisocyanate a) and the at least one polyol component b), wherein the amount of water is at least 1.80 mol/kg of polyol component b) and the amount of halogenated alkene is at most 2.00 mol/kg of polyol component b); and
wherein the halogenated alkenes are selected from cis- or trans-1,1,1,3-tetrafluoropropene, 1,1,1-trifluoro-2-chloropropene, 1-chloro-3,3,3-trifluoropropene, 1,1,1,2,3-pentafluoropropene, in cis or trans form, 1,1,1,4,4,4-hexafluorobutene, 1-bromopentafluoropropene, 2-bromopentafluoropropene, 3-bromopentafluoropropene, 1,1,2,3,3,4,4-hepta-fluoro-1-butene, 1-bromo-2,3,3,3-tetrafluoropropene, 2-bromo-1, 3, 3, 3-tetrafluoropropene, 3-bromo-1,1,3,3-tetrafluoropropene, 2-bromo-3,3,3-trifluoropropene, E-1-bromo-3,3,3-trifluoropropene, 3,3,3-trifluoro-2-(trifluoromethyl)propene, 1,1,1-trifluoro-2-butene and mixtures thereof; where the total amount of halogenated alkenes present in the polyol component is at most 2.00 mol/kg of polyol component.

8. The use of a blowing agent mixture comprising water and halogenated alkenes in at least one polyol component b) for increasing the adherence and reducing the thermal conductivity of rigid polyurethane foams formed from at least one organic polyisocyanate a) and at least one polyol component b), wherein the amount of water is at least 1.80 mol/kg of polyol component b) and the amount of halogenated alkene is at most 2.00 mol/kg of polyol component b); and
wherein the halogenated alkenes are selected from cis- or trans-1,1,1,3-tetrafluoropropene, 1,1,1-trifluoro-2-chloropropene, 1-chloro-3,3,3-trifluoropropene, 1,1,1,2,3-pentafluoropropene, in cis or trans form, 1,1,1,4,4,4-hexafluorobutene, 1-bromopentafluoropropene, 2-bromopentafluoropropene, 3-bromopentafluoropropene, 1,1,2,3,3,4,4-hepta-fluoro-1-butene, 1-bromo-2,3,3,3-tetrafluoropropene, 2-bromo-1, 3, 3, 3-tetrafluoropropene, 3-bromo-1,1,3,3-tetrafluoropropene, 2-bromo-3,3,3-trifluoropropene, E-1-bromo-3,3,3-trifluoropropene, 3,3,3-trifluoro-2-(trifluoromethyl)propene, 1,1,1-trifluoro-2-butene and mixtures thereof; where the total amount of halogenated alkenes present in the polyol component is at most 2.00 mol/kg of polyol component.

9. A rigid polyurethane foam obtainable by the process according to any one of claims 1 to 6.

## Revendications

1. Procédé de fabrication de mousses dures de polyuréthane par mise en réaction de :
a) au moins un polyisocyanate organique avec
b) au moins un composant polyol contenant un mélange d'agents gonflants, contenant de l'eau et des alcènes halogénés,
**caractérisé en ce que** la quantité d'eau est d'au moins 1,840 mole/kg de composant polyol b) et la quantité d'alcènes halogénés est d'au plus 2,00 moles/kg de composant polyol b) ; et
**en ce que** les alcène halogénés sont choisis parmi cis- ou trans-1,1,1,3-tétrafluoropropène, 1,1,1-trifluoro-2-chloro-propène, 1-chloro-3,3,3-trifluoropropène, 1,1,1,2,3-pentafluoropropène, sous forme cis ou trans, 1,1,1,4,4,4-hexafluorobutène, 1-bromopentafluoropropène, 2-bromopentafluoropropène, 3-bromopentafluoropropène, 1,1,2,3,3,4,4-heptafluoro-1-butène, 1-bromo-2,3,3,3-tétrafluoropropène, 2-bromo-1,3,3,3-tétrafluoropropène, 3-bromo-1,1,3,3-tétrafluoropropène, 2-bromo-3,3,3-trifluoropropène, E-1-bromo-3,3,3-trifluoropropène, 3,3,3-trifluoro-2-(trifluorométhyl)propène, 1,1,1-trifluoro-2-butène et des mélanges correspondants ; la quantité totale d'alcènes halogénés qui sont contenus dans le composant polyol étant d'au plus 2,00 moles/kg de composant polyol.

2. Procédé selon la revendication 1, **caractérisé en ce que** le composant polyol b) contient un additif supplémentaire choisi dans le groupe constitué par les carbonates d'alkylène, les amides d'acide carbonique, les pyrrolidones, les catalyseurs, les adjuvants, les additifs et leurs mélanges.

3. Procédé selon la revendication 1 ou 2, **caractérisé en ce que** le composant b) contient un polyéther-alcool biii) ayant une fonctionnalité de 2 à 3 et un indice d'hydroxyle de 150 à 450 mg de KOH/g.

4. Procédé selon la revendication 3, **caractérisé en ce que** le polyéther-alcool biii) est utilisé en une quantité de 2 à 40 % en poids, par rapport au composant polyol b) .

5. Procédé selon l'une quelconque des revendications 1 à 4, **caractérisé en ce que** le composant b) contient un polyéther-alcool bii) ayant une fonctionnalité de 3,5 à 5,5 et un indice d'hydroxyle de 350 à 600 mg de KOH/g.

6. Procédé selon la revendication 5, **caractérisé en ce que** le polyéther-alcool bii) est utilisé en une quantité de 20 à 55 % en poids, par rapport au composant polyol b) .

7. Utilisation d'un mélange d'agents gonflants contenant de l'eau et des alcènes halogénés dans au moins un composant polyol b) pour la fabrication de mousses dures de polyuréthane à partir d'au moins un polyisocyanate organique a) et dudit au moins un composant polyol b), **caractérisée en ce que** la quantité d'eau est d'au moins 1,840 mole/kg de composant polyol b) et la quantité d'alcènes halogénés est d'au plus 2,00 moles/kg de composant polyol b) ; et **en ce que** les alcène halogénés sont choisis parmi cis- ou trans-1,1,1,3-tétrafluoropropène, 1,1,1-trifluoro-2-chloro-propène, 1-chloro-3,3,3-trifluoropropène, 1,1,1,2,3-pentafluoropropène, sous forme cis ou trans, 1,1,1,4,4,4-hexafluorobutène, 1-bromopentafluoropropène, 2-bromopentafluoropropène, 3-bromopentafluoropropène, 1,1,2,3,3,4,4-heptafluoro-1-butène, 1-bromo-2,3,3,3-tétrafluoropropène, 2-bromo-1,3,3,3-tétrafluoropropène, 3-bromo-1,1,3,3-tétrafluoropropène, 2-bromo-3,3,3-trifluoropropène, E-1-bromo-3,3,3-trifluoropropène, 3,3,3-trifluoro-2-(trifluorométhyl)propène, 1,1,1-trifluoro-2-butène et des mélanges correspondants ; la quantité totale d'alcènes halogénés qui sont contenus dans le composant polyol étant d'au plus 2,00 moles/kg de composant polyol.

8. Utilisation d'un mélange d'agents gonflants contenant de l'eau et des alcènes halogénés dans au moins un composant polyol b) pour l'augmentation de l'adhésion et pour la réduction de la conductivité thermique de mousses dures de polyuréthane composées d'au moins un polyisocyanate organique a) et d'au moins un composant polyol b), **caractérisée en ce que** la quantité d'eau est d'au moins 1,80 mole/kg de composant polyol b) et la quantité d'alcènes halogénés est d'au plus 2,00 moles/kg de composant polyol b) ; et **en ce que** les alcènes halogénés sont choisis parmi cis- ou trans-1,1,1,3-tétrafluoropropène, 1,1,1-trifluoro-2-chloro-propène, 1-chloro-3,3,3-trifluoropropène, 1,1,1,2,3-pentafluoropropène, sous forme cis ou trans, 1,1,1,4,4,4-hexafluorobutène, 1-bromopentafluoropropène, 2-bromopentafluoropropène, 3-bromopentafluoropropène, 1,1,2,3,3,4,4-heptafluoro-1-butène, 1-bromo-2,3,3,3-tétrafluoropropène, 2-bromo-1,3,3,3-tétrafluoropropène, 3-bromo-1,1,3,3-tétrafluoropropène, 2-bromo-3,3,3-trifluoropropène, E-1-bromo-3,3,3-trifluoropropène, 3,3,3-trifluoro-2-(trifluorométhyl)propène, 1,1,1-trifluoro-2-butène et des mélanges correspondants ; la quantité totale d'alcènes halogénés qui sont contenus dans le composant polyol étant d'au plus 2,00 moles/kg de composant polyol.

9. Mousse dure de polyuréthane, pouvant être fabriquée par le procédé selon l'une quelconque des revendications 1 à 6.
